# EUROPEAN PATENT APPLICATION

(11) **EP 1 980 153 A1**
(43) Date of publication of application: **15.10.2008**
(21) Application number: 08153383.8
(22) Date of filing: 27.03.2008
(51) Int. Cl.: A23C 9/13, A23C 9/156, A23C 19/09, A23G 9/28, B65B 39/00, A23P 1/08, A23L 1/00

(54) **Process and device for producing a chilled dessert item containing a crunchy composition arranged in superimposed layers in its mass**

(30) Priority: 03.04.2007 FR 0754252
(71) Applicant: Nestec S.A., 1800 Vevey (CH)
(72) Inventor: Moreau, Jean, 14340 Manerbe (FR); Cordray, Ann-Gaël, 14340 Le Pre d'Auge (FR); Swertvaegher, François, 14100 Courtonne la Meurdrac (FR)

(57) **Abstract**

The process comprises the following steps:
- a helical ribbon of milk product is continuously metered through an aperture of a metering nozzle;
- a layer of molten substance intended to form the crunchy composition after cooling is applied, to the ribbon being formed, continuously from the beginning of it being formed to the end of it being metered, by metering through at least one molten substance outlet orifice of said nozzle; and
- the helical layer of substance thus being formed is trapped between the first ribbon of product and a second helical ribbon of fresh milk product, by concomitantly and continuously metering the second ribbon of product through a second aperture of the metering nozzle, such that said second ribbon is deposited onto the helical layer of substance being formed, simultaneously with the substance coming into contact with the first helical ribbon being formed.

## Description

### Field of the invention

The invention relates to a process for producing a chilled dessert item containing a crunchy composition arranged in superimposed layers in its mass.

It relates more particularly to a chilled product comprising at least two products, at least one of them being a fresh milk product of cream or mousse type and the other consisting of a chocolate that is crunchy in nature after cooling.

The invention also relates to the dessert item obtained by means of this production process and the device for carrying out this process.

### Background of the invention

Fresh multilayer products containing at least one layer of chocolate pieces are already known on the market. Thus, for example, document WO 2006/046151 proposes injecting a discontinuous stream of chocolate into a pot into which a stream of milk base is also injected.

The injection is carried out such that the layer of chocolate pieces contains chocolate pieces that are isolated or connected to one another in such a way as to form a layer or a three-dimensional structure that is discontinuous. In this document, the term *"discontinuous"* is intended to mean that the chocolate pieces are connected to one another while forming bores which reveal the lower layer of product. In other words, the corresponding layer is not continuous. The recommended technique for injecting the chocolate in this document is spotting, i.e. injection of a metered amount of liquid chocolate which solidifies in the form of shavings or filaments.

Moreover, this document teaches carrying out the metering at relatively low temperatures, i.e. just above the freezing point of the milk product and up to a maximum of 12°C for said product, and just above the melting point for the chocolate. Although this proves to be advantageous from the point of view of product malleability and due to the fact that the molten chocolate congeals instantaneously on contact with the milk product, these advantages are extremely difficult to control at the industrial stage, because of the destruction of the texturing agents when the crystallization stage is reached, because of the need to carefully insulate the pipework and because of the risk of the chocolate congealing in the pipes or metering nozzles.

Document EP 0 615 692 proposes, moreover, the production of a chilled product based on at least one mousse containing chocolate pieces.

The present invention aims to provide the consumer with a novel chilled product based on a cream or a mousse and on chocolate that is crunchy in nature after cooling, which appears to be a succession of superimposed layers of dairy cream or mousse and of thin layers or sheets of chocolate constituting as many crunchy layers.

Processes and apparatuses for producing a dessert item containing sheets of crunchy composition in its mass indeed exist, such as those described, for example, in documents EP 0 485 654 and EP 0 434 857, but they are, in practice, limited to iced confectionary products. In fact, a milk product, such as a mousse or a cream, does not have a malleable texture like that of an overrun product (ice cream, in the same way as sorbet) which, when metered at a negative temperature generally of between -2 and -6°C, contains a considerable portion of water in the frozen state. In addition, the added product, such as the molten chocolate, is not able to congeal instantaneously by coming into contact with a product at negative temperature. With this type of process, it is therefore driven from the centre to the periphery of the pot, during filling, by the more viscous milk product, sticks to the pot and rises to the top as the filling takes place.

The processes and apparatuses suitable for the production of cold desserts are therefore generally limited, because of the above, to adding products which are relatively viscous. Thus, for example, document EP 1 348 340 proposes the production of a milk product with stripes of a non-milk base, such as a fruit pulp, the viscosity of which is between 3500 and 6000 cPs (1 cPs = 1 × 10⁻³ Pa.s).

It is also worth reporting, with respect to this document, that the technology proposed by the latter is limited to obtaining lateral stripes, trapped between the milk product and the pot.

Document EP 0 770 332 proposes, in order to add one or more horizontal layers of crunchy chocolate type on or in a product, such as a mousse or a cream, producing the layer(s) by spraying, the dessert base (product) being obtained by multi-metering. Such technology is complex and requires the use of several metering devices.

The present invention aims to improve processes and devices of this type.

### Summary of the invention

To this effect, the present invention proposes a process for producing a chilled dessert item containing a crunchy composition arranged in superimposed layers in its mass, comprising the following steps:
- a helical ribbon of milk product is continuously metered through a milk product outlet orifice of a metering nozzle;
- a layer of molten substance intended to form the crunchy composition after cooling is applied, to the helical ribbon being formed, continuously from the beginning of it being formed to the end of it being metered, by metering through at least one molten substance outlet orifice of said metering nozzle; and
- the helical layer of molten substance thus being formed is trapped between the first ribbon of milk product and a second helical ribbon of milk product, by concomitantly and continuously metering the second ribbon of milk product through a second milk product outlet orifice of the metering nozzle, such that said second ribbon is deposited onto the helical layer of molten substance being formed, simultaneously with the molten substance coming into contact with the first helical ribbon being formed.

By virtue of these arrangements, the molten substance is trapped between two layers of milk product and spreads out naturally into a thin layer, like a broad helical stripe, from the bottom of the packaging container into which it is introduced, to the top of this container.

After cooling, the dessert obtained thus appears to be a superimposed succession of layers of milk product and of thin layers of crunchy composition.

The metered products are preferably, but not exclusively, a mousse or a cream for the milk product and chocolate for the molten substance intended to form the crunchy composition after cooling. A fruit pulp can, for example, be envisaged in place of the chocolate.

The chocolate is produced, sterilized, and then conserved at between 35 and 50°C according to processes already known in the prior art, as described, for example, in documents EP 0 781 510 and EP 0 770 332. Similarly, the recipe makes use, in practice, of conventional ingredients and proportions which make it possible, despite a small thickness and while being immersed in a fresh milk product having a high Aw (water activity), to preserve the crunchiness throughout the product's shelf life (of the order of four weeks).

Such recipes are described, for example, in document EP 0 615 692, which uses specific chocolate recipes for preventing softening in a wet medium during the shelf life, in particular with little sugar.

In the case of this document, the chocolate also underwent a heat treatment which enables the crunchy preparation (of chocolate, for example) to reduce the microbial load and to render the preparation compatible with the shelf life of the fresh product.

In practice, it may be a chocolate with a low water content, preferably less than 5%, comprising predominantly cacao butter or cacao butter substitutes of vegetable origin with a controlled melting point, and with a low content of sugar and proteins having a high tendency to take up water, and therefore generally with added sweeteners and flavours so as to sweeten the bitterness.

The crunchy layer may also be predominantly made up of fats with a melting point identical to cacao butter, and containing specific ingredients for giving it a note that is fruity, of caramel or white chocolate, for example.

The chocolate used has, in practice, a viscosity of less than 0.1 Pa.s (100 cPS) at 50°C.

The chilled dessert in accordance with the invention comprises, in this regard, fermented milk-based products, of "fromage blanc" type, and yoghurt-based products.

The milk product is also produced and sterilized according to conventional processes. The intermediate storage and metering temperatures are also those conventionally used for milk products, without any specific constraint, in general between 10 and 15°C.

More generally, according to preferred arrangements, optionally taken in combination:
- the molten substance is injected into the metering nozzle in an adjustable manner;
- the milk product intended for each of the orifices is injected into the metering nozzle in an adjustable manner;
- the adjustable injection is obtained by servocontrol;
- the nozzle rotates around a vertical axis, preferably in a servocontrol-adjusted manner, so as to give the first and second ribbons and the layer of molten substance their helical structure, the number of revolutions being greater than 2, preferably equal to 4 or 5;
- the nozzle also moves upwards during metering, preferably in a servocontrol-adjusted manner;
- the dessert is introduced into a packaging container, preferably a pot;
- the metering of each of the fresh milk product ribbons is carried out through a slot-shaped orifice, preferably in the shape of a buttonhole;
- said at least one molten substance outlet orifice is a circular orifice;
- the application of the helical layer of molten substance is carried out by means of three aligned orifices, the two milk product outlet orifices being angled away from the vertical axis of rotation and placed on either side of the molten substance outlet orifices;
- the molten substance is molten chocolate, preferably prepared according to a recipe based on fat, in particular on cacao butter, suitable for remaining crunchy throughout the shelf life of the dessert item;
- the chocolate has a viscosity of less than 0.1 Pa.s (100 cPs) at 50°C;
- the chocolate is metered at a temperature of between 35 and 50°C, preferably at approximately 45°C;
- the milk product is a mousse or a cream; and
- the milk product is metered at a temperature of between 10 and 20°C, preferably between 13 and 20°C.

The invention also proposes a dessert item obtained according to the process as defined above.

A subject of the invention is also a unit for producing a chilled dessert item containing a crunchy composition arranged in superimposed layers in its mass, characterized in that it comprises:
- a metering nozzle mounted to rotate around a vertical axis and comprising two slot-shaped metering orifices for a milk product, angled away from the axis and placed on either side of at least one outlet orifice for a molten substance intended to form the crunchy composition after cooling;
- means for continuously feeding the nozzle with milk product and molten substance; and
- servocontrol means for adjusting the feeding of the nozzle with milk product and molten substance.

According to preferred arrangements, optionally taken in combination, of this production unit:
- servocontrol means for adjusting the speed of rotation of the metering nozzle are provided;
- means for the translational movement of the metering nozzle, preferably adjusted by servocontrol means, are provided;
- the servocontrol means are of the brushless motor type;
- the two slot-shaped orifices are in the shape of a buttonhole; and
- said at least one molten substance outlet orifice is a circular orifice.

### Brief description of the drawings

Additional features and advantages of the present invention are described in, and will be apparent from, the description of the presently preferred embodiments which are set out below with reference to the drawings in which:
- Figure 1 is a schematic view of a metering and dispensing unit for carrying out the process for producing a chilled dessert item in accordance with the invention;
- Figure 2 is a very schematic, partial axial sectional view of a metering head in accordance with the invention;
- Figure 3 is a view in the plane from below the nozzle of the metering head represented in Figure 2;
- Figures 4a and 4b are very schematic sectional views along lines IVa-IVa and IVb-IVb of Figure 3, respectively; and
- Figure 5 is a schematic axial sectional view of a chilled dessert item obtained by means of the production process in accordance with the invention.

### Detailed description of the invention

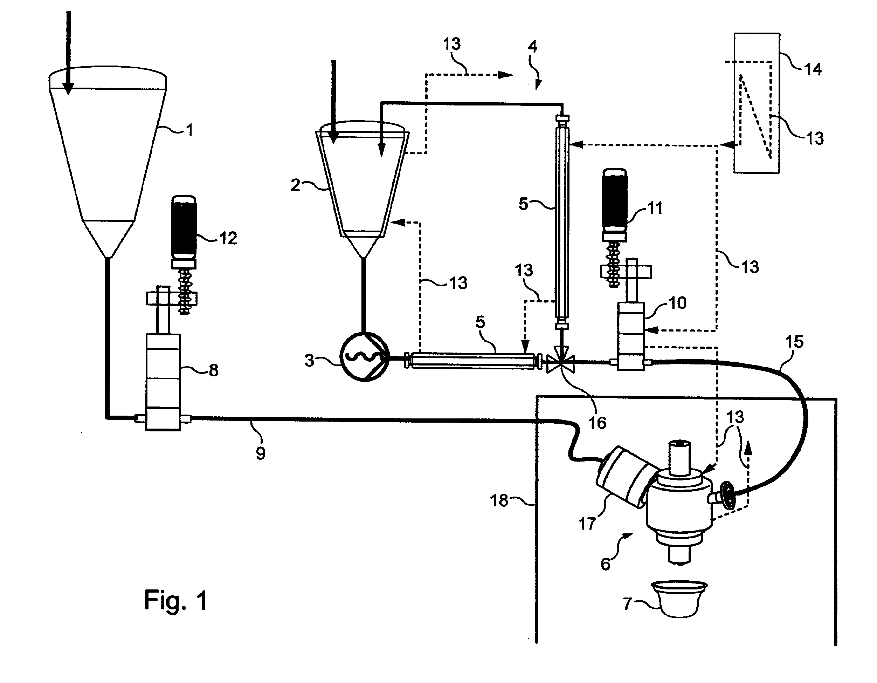

In the preferred embodiment of the invention represented in **Figure 1****,** a milk product, in this case in the form of a mousse, is recovered in a hygienic buffer container 1 under adjusted sterile air pressure.

Chocolate is also recovered in a jacketed hygienic buffer container 2 under sterile air, at a temperature of between 35 and 50°C, preferably at approximately 45°C.

It is continually circulated by means of a positive pump 3 and of a closed circuit (closed recirculation loop 4) made up of jacketed pipes 5.

The dose of milk product is continuously and adjustably pushed out to a metering head 6 and then into a pot 7 by means of a hygienic metering device of metering piston cylinder 8 type placed on the milk product feed line connecting the buffer container 1 to the metering head 6.

The dose of chocolate is itself continuously and adjustably pushed out by means of a metering piston cylinder 10. This piston is advantageously equipped with a jacket (not represented) for adjusting the temperature and thus preventing any risk of the chocolate hardening.

The continuous pushing of the chocolate in this metering piston cylinder 10 is in this case controlled by means of an electric motor of servomotor type 11, also called *"brushless"* motor, and commonly used by those skilled in the art for tricky meterings. The chocolate is thus continuously and adjustably injected into the metering head 6, throughout the phase of expulsion of the milk product (mousse), from the bottom of the pot 10 to the end of the metering of the mousse.

The same is also true for said mousse, due to the fact that the metering piston cylinder 8 is, in this case, also coupled to a servomotor 12.

Such servocontrolled metering pistons are in particular sold by the companies that supply ultraclean packaging lines, such as Erca, Nova or Hassia, for example under reference Erca DM300 (for metering the mousse) and, with a rotating flap valve, from the company Doselec for the chocolate.

Moreover, the temperature of the chocolate is adjusted by means of a heat-transfer fluid (in this case, hot water) circulating in a circuit 13 represented as dashed lines in Figure 1 and feeding the jackets of the buffer container 2, the pipes 5, the metering piston cylinder 10 and the metering head 6.

A heat exchanger 14 makes it possible to reheat the heat-transfer fluid by means of steam.

It will also be observed that the metering piston cylinder 10 is placed on a feed line 15 for feeding the metering head 6 with chocolate, which is connected, by one of its ends, to the recirculation loop 4, preferably via an adjustable three-way valve 16.

For its part, the mousse feed line 9 is connected to the metering head 6 by means of a membrane valve 17 which equips this head and makes it possible, as needed, to instantly cut off the mousse-feed to this head 6.

The entire system, as has just been described with reference to Figure 1, is in practice used in such a way as to meet the hygiene requirements described, in the profession, as *"ultraclean",* and comprising, in particular, *in situ* cleaning.

In addition, since the chilled dessert item in accordance with the invention and obtained by virtue of the metering unit represented in Figure 1 must have a shelf life of more than three weeks, the metering is carried out in a filtered-air laminar flow chamber 18 in which the pots to be filled circulate. The latter are, for example, carried by a conveyor belt (not represented) that passes step by step under the metering head 6.

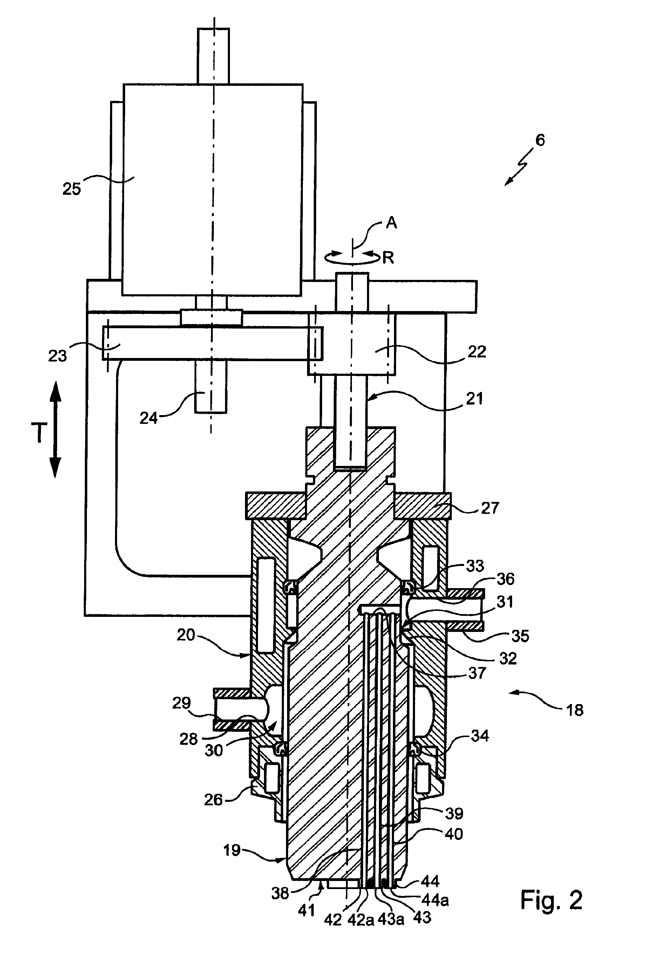

The metering head 6 is represented in greater detail in **Figure 2**.

This metering head 6 comprises a dispensing nozzle 18 comprising a rotating nozzle body 19 mounted in a hollow sleeve 20 forming a lining of this body 19 in the upper region of the latter.

In the example represented, the nozzle body 19 is connected to a control rod 21, by any appropriate means, in this case by screwing.

This control rod 21 has a toothed collar 22 which meshes with a toothed wheel 23 mounted on the output shaft 24 of a motor 25, which have not been represented sectionally in Figure 2.

As regards conventional means for driving the rotation of a rotating nozzle body, the elements which have just been described will not be described in greater detail here.

The motor 25 is able to cause the control rod 21 and therefore the nozzle body 19 coupled to this rod to rotate, as indicated by the double-headed arrow R.

Using any appropriate means for raising and descending, such as a screw (not represented), the assembly consisting of the metering nozzle 18 and the means for driving the rotation thereof can also be moved translationally along the direction of the axis A of rotation of the nozzle body 19, as indicated by the double-headed arrow T.

The end of the nozzle body 19 opposite that via which it is linked to the drive means is mounted in a second hollow sleeve 26 in which circulates - as, moreover, in the sleeve 20 - the heat-transfer fluid intended to adjust the temperature of the chocolate in order to keep it in the molten state until it is ejected from the metering nozzle 18.

This second sleeve 29 is fastened to the sleeve 20 and is fixed to the latter by any appropriate means, for example screwing (not represented), while the upper end of the sleeve 20 is capped with a disc 27, in which there is an opening for the nozzle body 19 to pass through. Moreover, this sleeve 20 comprises, here in the vicinity of the sleeve 26, a bore 28 which communicates with an outlet aperture 29 of the membrane valve 17 (partially represented in this Figure 2).

This bore 28 opens, at its end opposite that which communicates with the aperture 29, into a lower annular dispensing chamber 30 for dispensing the fresh milk product. This lower chamber is, here, formed by a hollow in the sleeve 20.

This lower dispensing chamber 30 is separated from an upper dispensing chamber 31 for dispensing the chocolate by an internal annular projection 32 of the sleeve 20.

The upper and lower chambers 31, 30 are, here, each delimited axially by a leaktight seal 33, 34 interposed between the rotating nozzle body 19 and the sleeve 20.

The sleeve 20 comprises, moreover, a fitted part 35 for feeding the metering head 6 with chocolate, which communicates with a bore 36 in the sleeve 20, which opens into the upper chamber 31.

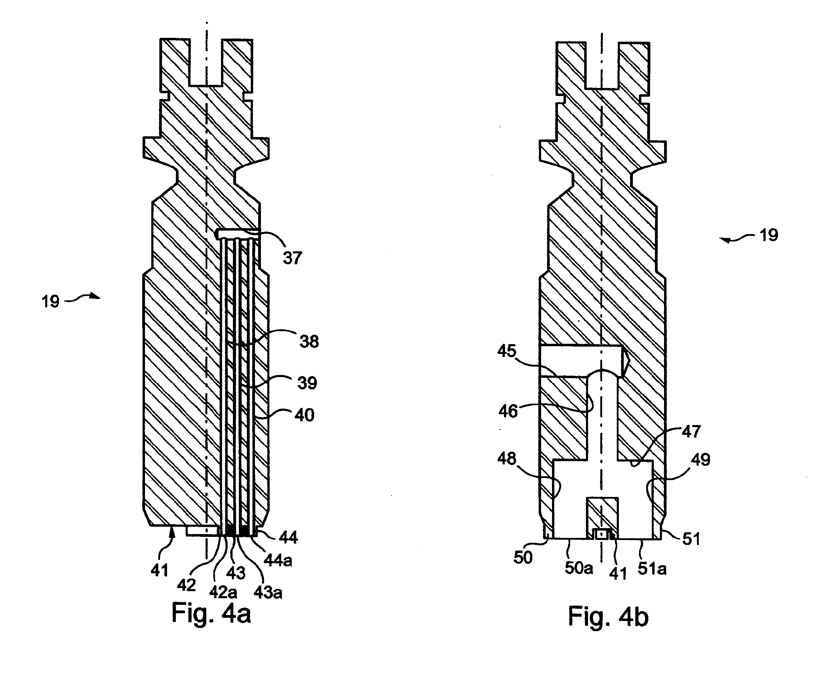

As is seen in Figures 2 and 4a, the upper annular chamber 31 is intended to feed with chocolate a blind radial bore 37 made in the rotating nozzle body 19.

This bore 37 opens up into the external cylindrical face of the rotating nozzle body 19 and communicates with three channels 38, 39, 40, extending parallel to the axis of rotation A, via one of their longitudinal ends.

These channels 38 to 40 extend, in this case, very slightly beyond the edge 41 of the rotating nozzle body 19 located at the end of the latter opposite that connected to the control rod 21, each by means of a tubular projection 42, 43, 44, produced, in this case, as a single component with the rotating nozzle body 19.

Each of these projections 42, 43, 44 defines a chocolate outlet orifice 42a, 43a, 44a and makes it possible advantageously to prevent contact and *"sticking"* phenomena during metering.

Similarly (see Figure 4b), the lower annular chamber 30 is intended to feed with mousse a radial bore 45 made in the rotating nozzle body 19. This bore 45 is also blind and itself also opens onto the external cylindrical face of this rotating nozzle body 19.

It communicates with an axial channel 46 which extends axially to a channel 47 which is transversal to the axis A and communicates, on either side of the axial channel 46, with channels 48, 49 which each open to the exterior of the rotating nozzle body 19 via the edge 41.

These channels 48 and 49 are themselves also both extended, by means of an annular projection 50, 51, each defining a mousse outlet orifice 50a, 51 a, very slightly beyond the edge 41.

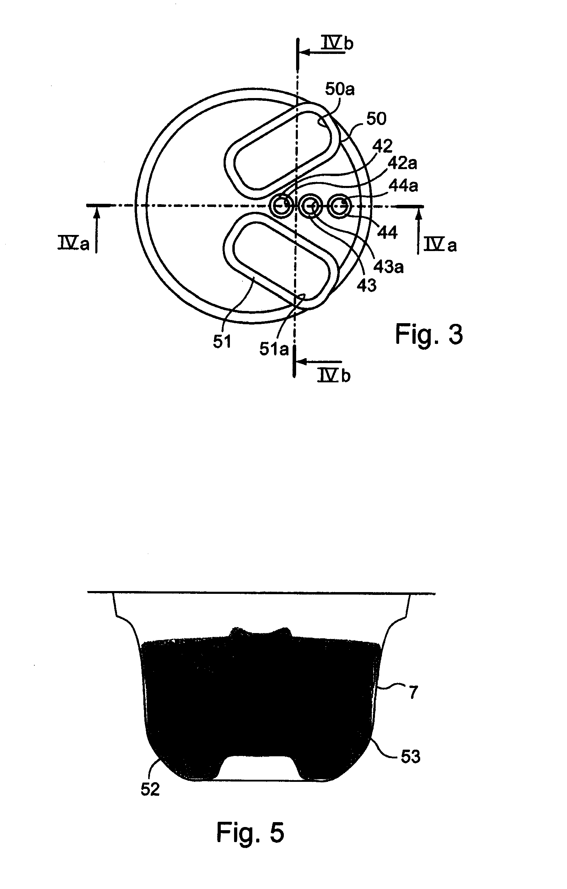

As is seen more clearly in Figure 3, these orifices 50a, 51a are in the shape of a slot, more specifically in the shape of a buttonhole, while the orifices 42a, 43a, 44a are circular orifices.

It will also be observed that the three circular chocolate outlet orifices 42a, 43a and 44a are aligned, in this preferred embodiment, along a straight line intersecting the vertical axis A, and are arranged between the two mousse outlet orifices 50a and 51 a.

More specifically, the two slot-shaped orifices 50a and 51 a are angled away from the axis A and placed on either side of the three outlet orifices 42a, 43a, and 44a for chocolate outlet. In other words, these mousse and chocolate outlet orifices are arranged according to a fan-shaped arrangement, the chocolate outlet orifices 42a, 43a and 44a extend halfway between each of the mousse outlet orifices 50a and 51 a.

It will also be observed that, arranged in this way, these orifices extend, in the case of this preferred embodiment, along a plane transversal to the axis A.

The chocolate outlet orifices 42a, 43a and 44a are, moreover, separated from one another in such a way as to cover a distance substantially equal to the length of the slot-shaped orifices 50a and 51a, while at the same time extending inside the perimeters delimited by the latter.

In practice, the chocolate outlet orifices 42a, 43a and 44a have a diameter which makes it possible to retain said chocolate by capillary action, i.e. of the order of 2 to 2.5 mm. The projections 42 to 44, and also 50 and 51, which define the various chocolate and mousse outlet orifices, go beyond the edge 41 of the rotating nozzle body 19 by approximately 5 mm.

The diameter of this nozzle body is adapted to the diameter of the pot into which the metering is carried out: it is thus, for example, of the order of 33 mm for a standard pot having an internal diameter of 55 mm and of the order of 40 mm for a thermoformed pot having an internal diameter of 65 mm.

The dimensions of the slot-shaped orifices 50a and 51 a are also adapted to the diameter of the pot into which the metering is carried out.

In the preferred embodiment, the rotating nozzle body 19 is made of chromium-plated stainless steel in order to withstand the abrasion of the chocolate. Other materials can, however, be envisaged, such as glass-filled polyether ether ketone (PEEK).

The leaktight seals 33 and 34 are made of PEEK and silicone or of Viton® in order to withstand the fatty products.

The pots may be of any shape and sizes, for example square or rectangular, frustoconical, cylindrical with a circular or oval cross section. They may be opaque or transparent so as to show the contrasting layers of the various masses. Preferably, these pots are multipacks and thermoformed, filled and sealed with covers continuously by means of *"form-fill-seal'* equipment.

A pot 7 thus filled is represented in axial section in Figure 5.

In general, the multilayer dessert filling the pot 7 is obtained by the combined action of a phase of extrusion (continuous metering) of the two products, i.e. the mousse and the chocolate, and of helical coiling by means of the metering nozzle 18, and more particularly of its rotating nozzle body 19.

In the preferred embodiment, the mousse and the chocolate are continuously and adjustably brought to the metering nozzle 18 throughout the expulsion phase, from the bottom of the pot to the end of the metering.

The chocolate is brought to the metering nozzle 18 in the molten state (temperature of the order of 45°C), while the mousse is brought to this nozzle 18 at a lower temperature, of between 13 and 20°C in the preferred embodiment.

The chocolate and the mousse were prepared according to recipes such as those described above.

During the chocolate and mousse expulsion phase, the nozzle advantageously performs a large number of revolutions, preferably greater than 2 and, in the preferred embodiment, between 4 and 5 revolutions around the axis A. This makes it possible to obtain numerous superimpositions of layers and a final appearance of the product where the layers appear to be virtually horizontal. In this regard, it should be noted that, advantageously, part of the rotation of the rotating nozzle body can be carried out in the clockwise direction and the rest in the anticlockwise direction.

In order to prevent the whirls of the products falling in lumps, and so that, on the contrary, they are correctly placed and spread out in evenly superimposed layers in the pot 7, the rotating nozzle body 19 moves from the bottom upwards along the direction of the double-headed arrow T, at a speed that is adjusted according to the product expulsion speed.

In turning, the chocolate is thus deposited in a thin layer (in practice, the thickness is between 0.3 mm and 1 mm, advantageously of the order of 0.5 mm) on the mousse and covered with the mousse from the expulsion orifice which follows.

More specifically:
- a helical ribbon of mousse is continuously metered through one of the orifice 50a and 51 a;
- a layer of chocolate in the molten state is applied, to this helical ribbon being formed, continuously from the beginning of it being formed to the end of it being metered, by metering through the orifices 42a, 43a and 44a; and
- the helical layer of chocolate thus being formed is trapped between the first ribbon of mousse and a second helical ribbon of mousse, by concomitantly and continuously metering the second ribbon of mousse through the second of the two orifices 50a and 51 a, such that said second ribbon is deposited onto the helical layer of chocolate being formed, simultaneously with the chocolate coming into contact with the first helical ribbon being formed.

In other words, the flow/expansion of mousse exceeds and traps the chocolate. The mousse thus in particular reaches the pot 7 before the chocolate, which is driven in the direction of the pot by the mousse development/flow forces. This makes it possible to prevent, as indicated above, the chocolate driven from the centre to the periphery sticking to the pot and then rising to the top as the filling takes place. In this regard, it should be pointed out that the drawback that comes from the fact of having chocolate on the side wall(s) of the pot is that said chocolate sticks to the pot and is then difficult to get out with a spoon when the product is eaten.

During the filling, the parameters of speed and flow rate of ejection of the two products are of course controlled by means of the servocontrol systems described above. The same is true of the speed at which the metering nozzle 18 rotates and ascends.

By virtue of these arrangements, during the cooling which follows the packaging operation (in cooling cells or in a tunnel, for example), the thin layer of chocolate (marked 52 on Figure 5) hardens and is, at the end, in the form of a superimposition of crunchy layers between layers of mousse 53, which crunchy layers are, when the product is eaten, easily broken under the pressure of the spoon, thereby releasing a multitude of small crunchy chocolate pieces.

Of course, the invention is not limited to the embodiment described and represented, but encompasses any variant of implementation within the scope of those skilled in the art.

In particular, any appropriate means can be used to drive the rotation of the rotating nozzle body.

Moreover, the metering nozzle can be heated by means of electrical resistance elements instead of the heat-transfer fluid.

The two sleeves of this nozzle could, in addition, be produced by milling operations in the mass of a single block of material.

In addition, several radial bores may be made in the rotating nozzle body in order to feed the channels through which the chocolate and/or mousse pass. Grooves may themselves also be made in the rotating nozzle body in order to promote continuous feeding of the radial bores.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. Process for producing a chilled dessert item containing a crunchy composition arranged in superimposed layers in its mass, comprising the following steps:
- a helical ribbon of milk product is continuously metered through a milk product outlet orifice of a metering nozzle;
- a layer of molten substance intended to form the crunchy composition after cooling is applied, to the helical ribbon being formed, continuously from the beginning of it being formed to the end of it being metered, by metering through at least one molten substance outlet orifice of said metering nozzle; and
- the helical layer of molten substance thus being formed is trapped between the first ribbon of milk product and a second helical ribbon of milk product, by concomitantly and continuously metering the second ribbon of milk product through a second milk product outlet orifice of the metering nozzle, such that said second ribbon is deposited onto the helical layer of molten substance being formed, simultaneously with the molten substance coming into contact with the first helical ribbon being formed.

2. Process according to claim 1, wherein the molten substance is injected into the metering nozzle in an adjustable manner.

3. Process according to either of the preceding claims, wherein the milk product intended for each of the orifices is injected into the metering nozzle in an adjustable manner.

4. Process according to claim 2 or 3, wherein the adjustable injection is obtained by servocontrol.

5. Process according to any one of the preceding claims, wherein the nozzle rotates around a vertical axis, preferably in a servocontrol-adjusted manner, so as to give the first and second ribbons and the layer of molten substance their helical structure, the number of revolutions being greater than 2, preferably equal to 4 or 5.

6. Process according to claim 5, wherein the nozzle also moves upwards during metering, preferably in a servocontrol-adjusted manner.

7. Process according to any one of the preceding claims, wherein the dessert is introduced into a packaging container, preferably a pot.

8. Process according to any one of the preceding claims, wherein the metering of each of the milk product ribbons is carried out through a slot-shaped orifice, preferably in the shape of a buttonhole.

9. Process according to any one of the preceding claims, wherein said at least one molten substance outlet orifice is a circular orifice.

10. Process according to claims 5 and 9, wherein the application of the helical layer of molten substance is carried out by means of three aligned orifices, the two milk product outlet orifices being angled away from the vertical axis of rotation and placed on either side of the molten substance outlet orifices.

11. Process according to any one of the preceding claims, wherein the molten substance is molten chocolate, preferably prepared according to a recipe based on fat, in particular on cacao butter, suitable for remaining crunchy throughout the shelf life of the dessert item.

12. Process according to claim 11, wherein the chocolate has a viscosity of less than 0.1 Pa.s (100 cPs) at 50°C.

13. Process according to either one of claims 11 and 12, wherein the chocolate is metered at a temperature of between 35 and 50°C, preferably at approximately 45°C.

14. Process according to any one of the preceding claims, wherein the milk product is a mousse or a cream.

15. Process according to any one of the preceding claims, wherein the milk product is metered at a temperature of between 10 and 20°C, preferably between 13 and 20°C.

16. Dessert item obtained according to the process as defined in any one of the preceding claims.

17. Unit for producing a chilled dessert item containing a crunchy composition arranged in superimposed layers in its mass, **characterized in that** it comprises:
- a metering nozzle (18) mounted to rotate around a vertical axis (A) and comprising two slot-shaped metering orifices (50a, 51a) for a milk product, angled away from the axis (A) and placed on either side of at least one outlet orifice (42a, 43a, 44a) for a molten substance intended to form the crunchy composition after cooling;
- means for continuously feeding (1, 2, 8, 10) the nozzle with milk product and molten substance; and
- servocontrol (11, 12) means for adjusting the feeding of the nozzle with milk product and molten substance.

18. Production unit according to claim 17, which also comprises servocontrol means for adjusting the speed of rotation of the metering nozzle.

19. Production unit according to claim 17 or 18, which also comprises means for the translational movement of the metering nozzle, preferably adjusted by servocontrol means.

20. Production unit according to any one of claims 17 to 19, wherein the servocontrol means are of the brushless motor type.

21. Production unit according to any one of claims 17 to 20, wherein the two slot-shaped orifices are in the shape of a buttonhole.

22. Production unit according to any one of claims 17 to 21, wherein said at least one molten substance outlet orifice is a circular orifice.
